# NEUE EUROPÄISCHE PATENTSCHRIFT

(11) **EP 1 510 685 B2**
(45) Veröffentlichungstag und Bekanntmachung des Hinweises auf die Entscheidung über den Einspruch: **05.10.2011**
(45) Hinweis auf die Patenterteilung: 26.03.2008
(21) Anmeldenummer: 03019850.1
(22) Anmeldetag: 01.09.2003
(51) Int. Cl.: F02M 31/125, F02M 37/22, F23K 5/20

(54) **Heizeinrichtung für ein zu beheizendes Medium**
Heating device for a medium to be heated
Dispositif de chauffage pour un milieu à chauffer

(43) Veröffentlichungstag der Anmeldung: 02.03.2005
(73) Patentinhaber: DBK David + Baader GmbH, 76870 Kandel (DE)
(72) Erfinder: Proner, Mathias Dipl.-Ing., 76139 Karlsruhe / Baden (DE); Meitinger, Karlheinz, 76829 Landau (DE)
(74) Vertreter: Polte, Willi

(56) Entgegenhaltungen:
- EP-A- 0 367 631
- EP-A- 0 657 199
- EP-A- 1 158 158
- EP-A1- 0 367 631
- EP-A1- 1 316 347
- WO-A2-01/92714

## Beschreibung

Die Erfindung betrifft eine Heizeinrichtung für ein gasförmiges oder flüssiges zu beheizendes Medium gemäß dem Oberbegriff des Anspruchs 1.

Eine derartige Heizeinrichtung ist aus der EP 0 657 199 A2 bekannt.

Die US 4,406,785 zeigt eine Heizeinrichtung, die in ein Gehäuseteil eines Kraftstofffilters integriert ist. Diese Heizeinrichtung zeigt im Wesentlichen zwei übereinander liegende, ringförmige Kontaktplatten mit mehreren Heizelementen im Zwischenraum. Die Kontaktplatten erstrecken sich dabei im Wesentlichen jeweils in einer Ebene und sind parallel zueinander angeordnet. Aus der Ebene einer Kontaktplatte stehen einzelne Federabschnitte hervor. Ein Kontaktstück für den Anschluss an einen elektrischen Stromkreislauf erstreckt sich von der Oberfläche eines Heizergehäuses, welches parallel zu den beiden Kontaktplatten angeordnet ist. Ein Thermostat zur Unterbrechung des Stromkreislaufs bei Erreichen einer bestimmten Betriebstemperatur kann in das Kontaktstück integriert werden.

Solche Heizeinrichtungen werden seit vielen Jahren erfolgreich eingesetzt, dennoch wachsen die Anforderungen, die an solche Heizsysteme gestellt werden ständig. So verlangt der Markt insbesondere nach immer kleineren, kostengünstigeren Bauteilen bei im Wesentlichen gleichbleibender Funktionalität und Zuverlässigkeit. Zudem soll eine derartige Heizeinrichtung zur Reduzierung des Energieverbrauchs noch ökonomischer betrieben werden können.

Der Erfindung liegt dadurch die Aufgabe zugrunde, den Platzverbrauch einer Heizeinrichtung der eingangs erwähnten Art erheblich zu reduzieren und das Ansprechverhalten eines Thermostaten zu verbessern.

Die Aufgabe wird durch die Heizeinrichtung nach Anspruch 1 gelöst, wobei der Thermostat im Gehäuse so angeordnet ist, dass das Thermostatgehäuse die Ebene beider Kontaktplatten schneidet.

So wird, für die platzsparende Unterbringung des Thermostatkörpers im Inneren des Gehäuses, der "tote" Raum zwischen den Hauptebenen der beiden Kontaktplatten ideal ausgenutzt. Die gesamte Anordnung ist dadurch außerordentlich kompakt und lässt sich in sehr kleinem Volumen einbauen. Dadurch, dass der Thermostatkörper in den Raum zwischen den Kontaktplatten hineinragt, befindet er sich damit zumindest abschnittsweise in der unmittelbaren Nähe des Heizelements. Gerade bei Thermostaten mit kleinem Betriebsbereich z.B. (-2°C/+5°C) ist ein rasches Ansprechverhalten wünschenswert, was durch die erfindungsgemäße Lösung ermöglicht wird.

Die Kontaktplatten sind im Wesentlichen ringförmig und im Wesentlichen parallel zueinander angeordnet. Dadurch eignet sich die erfindungsgemäße Heizeinrichtung für den Einbau in die meisten gängigen Kraftstofffilter.

Eine ringförmige Kontaktplatte weist eine Unterbrechung der Ringform auf, wobei der Thermostat zumindest abschnittsweise innerhalb dieser Unterbrechung angeordnet ist. Die Ringform der Kontaktplatten ergibt sich durch die doppelte zylindrische Filtergehäuseform mit einem Außenzylinder und einem Innenzylinder, durch den der gefilterte Kraftstoff zum Kraftstoffabfluss des Filtergehäuses geführt wird.
Bei den Größenverhältnissen herkömmlicher Thermostate eignet sich der durch die Unterbrechung der Kontaktplatte freigelegte Raum zwischen dem Innen- und dem Außenzylinder eines Kraftstofffiltergehäuses besonders gut für die Unterbringung des Thermostaten.

Das Thermostatgehäuse weist eine zylindrische Form auf und ist so angeordnet, dass sich die Zylinderachse des Thermostatgehäuses im Wesentlichen senkrecht zur Ebene der Kontaktplatte erstreckt.

Die Differenz des Außen- und des Innenradius der ringförmigen Kontaktplatte entspricht im Wesentlichen dem Durchmesser des Thermostatgehäuses. So passt der Thermostat genau in den Zwischenraum zwischen dem Außen- und dem Innenzylinder eines Kraftstofffiltergehäuses.

In einer besonders bevorzugten Ausführungsform ist der Thermostat mit zumindest einer der Kontaktplatten fest verbunden und weist einen Kontaktanschluss für einen elektrischen Stromkreis auf, wobei die andere, nicht mit dem Thermostaten verbundene Kontaktplatte, einen weiteren Kontaktanschluss aufweist. Über die feste Verbindung des Thermostats mit einer der beiden Kontaktplatten ist im Betrieb eine gut leitende, elektrische Verbindung gewährleistet.

Ein besonders ökonomischer Betrieb der Heizeinrichtung wird ermöglicht, wenn der Thermostat einen Zweipunktschalter, vorzugsweise einen Bimetallschalter aufweist, der die Heizeinrichtung bei einer bestimmten gemessenen Minimaltemperatur, vorzugsweise -2°C, automatisch einschaltet und bei einer bestimmten gemessenen Maximaltemperatur, vorzugsweise +5°C, automatisch ausschaltet. Der Kraftstoff wird, wenn es die Umgebungsbedingungen nicht erfordern, auch nicht unnötig beheizt und wird Strom eingespart. Die Heizeinrichtung ist somit besonders gut für das Beheizen von Motorbetriebsstoffen geeignet.

Zudem erweist es sich als günstig, wenn die erste und die zweite Kontaktplatte mit jeweils zumindest einem Durchbruch versehen ist, und das Gehäuse zumindest einen Haltestift aufweist, der die Durchbrüche der ersten und der zweiten Kontaktplatte durchdringt. Dieser Haltemechanismus ist kompakt und erzeugt mit wenigen Bauteilen einen hohen Kontaktdruck. Die Heizeinrichtung kann somit insgesamt noch kompakter gebaut werden.

Besonders stabil wird die Anordnung, wenn pro Heizelement mindestens drei Haltestifte vorgesehen sind. Die Position des Heizelements ist somit gegen Verrutschen im Zwischenraum beider Kontaktplatten gesichert.

Zudem erleichtert es das Herstellungsverfahren erheblich, wenn das Gehäuse aus Kunststoff hergestellt ist. Kunststoffe sind in der Regel preisgünstig in der Anschaffung, überdies gestaltet sich die Formgebung für Kunststoffprodukte verhältnismäßig einfach. Kunststoffe wirken in der Regel zudem als Isolator für Wärme und Strom. So kann z.B. ungewollter Wärmeverlust über das Gehäuse verhindert werden.

Nachfolgend werden Aufbau und Funktionsweise einer Erfindungsgemäßen Heizeinrichtung anhand der Figuren erläutert. Es zeigen:
Fig.1: Explosionsansicht eines bevorzugten Ausführungsmodells
Fig.2: Das bevorzugte Ausführungsmodell in einer Gesamtansicht

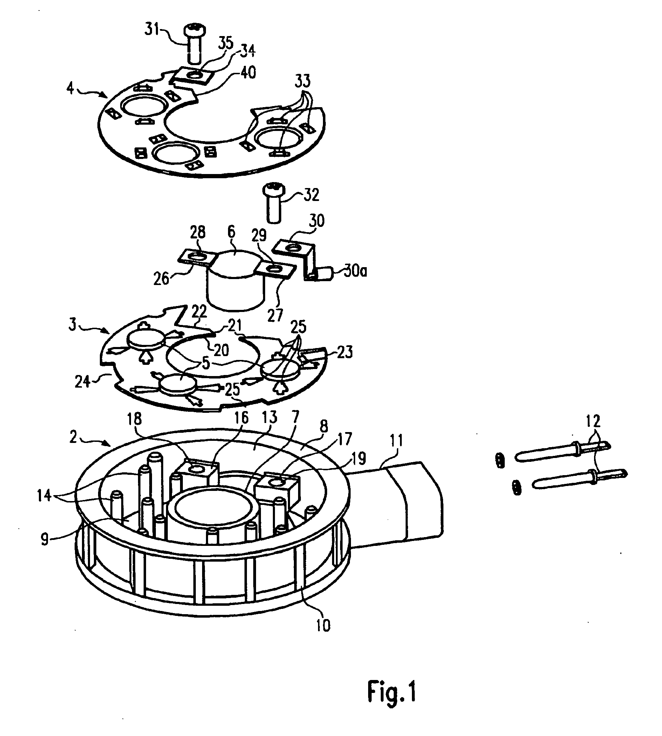

Figur 1 zeigt ein Gehäuseteil 2 aus Kunststoff mit einem Innenzylinder 7 und einem Außenzylinder 8. Beide Zylinder 7,8 sind über einen Gehäuseboden 9 verbunden. Am Umfang des Außenzylinders 8 sind Rippen 10 in gleichmäßigem Abstand angeordnet. Zudem ist an einer Stelle ein Anschlussstück 11 zur Abdeckung der elektrischen Kontaktstecker 12 vorgesehen. Im zusammengebauten Zustand ragen die Kontaktstecker 12 durch zwei Öffnungen im Außenzylinder 8 ins Innere des Gehäuses 2. Die Bodenseite 9 des Gehäuseteils 2 ist flach, ebenso wie die oberen Ränder der Innen- und Außenzylinder 7,8. An der Innenseite 13 des Außenzylinders 8 ist eine Führungsschiene 38 einstückig angeformt. Diese verläuft parallel zur Aufsteckrichtung A und dient dazu, die Kontaktplatten 3,4 bei der Montage auszurichten.

Im Inneren des Gehäuses 2, im Zwischenraum zwischen dem Innen- 7 und dem Außenzylinder 8, stehen senkrecht vom Gehäuseboden 9 Haltestifte 14 ab. Die Haltestifte 14 sind jeweils baugleich und speziell zur gleichmäßigen Befestigung der Kontaktplatten in Bezug auf die Heizelemente 5 angeordnet. Die Ausrichtung der Haltestifte 14 bestimmt die Aufsteckrichtung A, in der die Kontaktplatten 3,4 aufgesteckt werden. Insgesamt sind zwölf Haltestifte 14 vorgesehen. In etwa einem Viertel des Gehäuses 2 ist ein Abschnitt 15 zur Aufnahme eines Thermostatkörpers 6 vorgesehen. Seitlich am Abschnitt 15 sind zwei Schraubböcke 16,17 angeordnet. In den Schraubböcken 16,17 beiderseits des Abschnitts 15 sind Bohrungen 18,19 zur Fixierung des Thermostatkörpers 6 am Gehäusekörper 2 vorgesehen. Das gesamte Gehäuse 2 inklusive der Haltestifte 14 ist ein einziges Bauteil und kann z.B. in einer Form durch Spritzen hergestellt werden.

Die erste Kontaktplatte 3 ist plattenförmig und flach und beschreibt einen Ring, der über etwa 90° geöffnet ist. Um die erste Kontaktplatte 2 dennoch über an einem möglichst großen Umfang des Innenzylinders 7 anliegen zu lassen sind am Innenradius 20 der ersten Kontaktplatte 3 die Anlageabschnitte 21 vorgesehen. Die Öffnung 22 ist an die Größe des Abschnitts 15 angepasst, der zur Aufnahme der Thermostatkörpers 6 bestimmt ist. An dem Rand der ersten Kontaktplatte 3, der die Öffnung 16 begrenzt, ist ein Kontaktanschluss 23 vorgesehen, der aus dem Material der ersten Kontaktplatte 3 zurechtgebogen ist. Über Führungsabschnitte 24 am Außenumfang, die mit entsprechenden Abschnitten an der Innenwand 13 des Außenzylinders 8 im Eingriff stehen ist die Lage der ersten Kontaktplatte 3 zusätzlich gesichert.
Die erste Kontaktplatte 3 zeigt insgesamt zwölf Durchbrüche 25, die zur Aufnahme der zwölf Haltestifte 14 des Gehäuses 2 bestimmt sind und auf deren Positionen abgestimmt sind. Die Öffnungen 25 sind pfeilförmig, wobei die Spitzen der Pfeile jeweils zum Mittelpunkt der Kontaktfläche zum nächstgelegenen Heizelement 5 zeigen.

Der Thermostatkörper 6 ist im Wesentlichen zylindrisch und hat an einem oberen Gehäuseende zwei entgegengesetzt abstehende Kontaktfahnen 26,27 mit jeweils einem Bohrloch 28,29. An der Kontaktfahne 27 wird ein Kontaktblech 30 angesetzt; dieses bildet an dem vom Thermostatkörper 6 abweisenden Ende einen weiteren Kontaktanschluss 30a. Die Bohrlöcher 28,29 sind zur Aufnahme von Schrauben 31,32 bestimmt, die zur Fixierung des Thermostats in die Bohrungen 18,19 in den Schraubböcken 16,17 seitlich des Abschnitts 15 geschraubt werden. Der Thermostat 6 umfasst einen Bimetallschalter, wodurch der Stromkreis bei in etwa -2°C geschlossen und bei in etwa +5°C geöffnet wird.

Die zweite Kontaktplatte 4 ist ebenso plattenförmig, flach und ringförmig und ist über eine Bereich 40 von etwa 90° unterbrochen. Die Durchbrüche 33 sind auf die Haltestifte 14 abgestimmt. Am Rand der Unterbrechung ist ein Befestigungsabschnitt 34 hochgebogen und mit einem Bohrloch 35 versehen, welches auf das Bohrloch 28 am kurzen Halteabschnitt 26 des Thermostats 6 abgestimmt ist. Im montierten Zustand wirkt ein Führungsabschnitt 37 mit einer Führungsschiene 38 an der Innenseite 13 des Außenzylinders 8 des Gehäuses 2 zusammen.

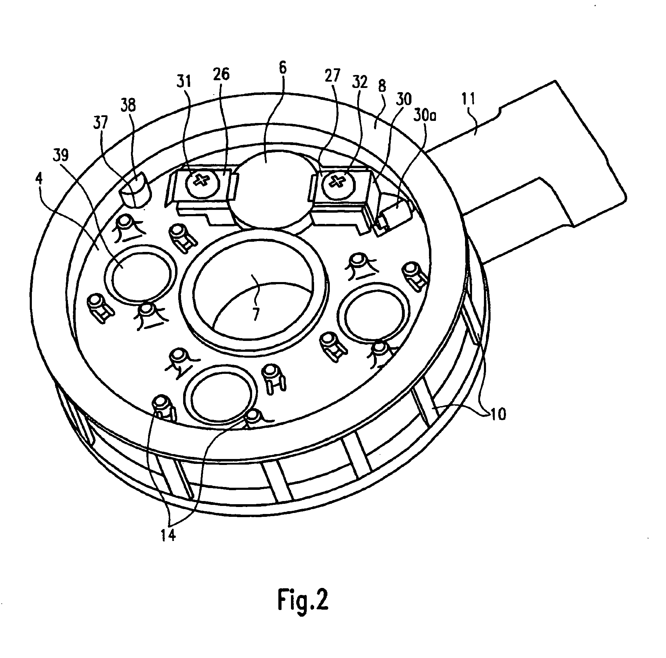

Figur 2 zeigt die Heizeinrichtung im montierten Zustand. Der Thermostatkörper 6 ist in seiner vorgesehenen Position so angeordnet, dass sich die Zylinderachse im Wesentlichen senkrecht zu den Kontaktplattenebenen erstreckt. Die Kontaktplatten 3,4 sind großteils jeweils eben und flach und definieren so jeweils eine Hauptebene, die der Thermostatkörper 6 im montierten Zustand schneidet. So wird, für die platzsparende Unterbringung des Thermostatkörpers 6 im Inneren des Gehäuses 2 der "tote" Raum zwischen den beiden Kontaktplatten 3,4 ausgenutzt.

Im Folgenden sind die Durchbrüche 33 in der zweiten Kontaktplatte 4 beschrieben. Sie zeigen im Wesentlichen ein H-Profil und sind auf Kreisen an die Mittelpunkte der Heizelemente 5 angeordnet. An zwei gegenüberliegenden Seiten sind die Federzungen 36 angeordnet, wobei sich die Federzungen 36 im Wesentlichen tangential zu einem Kreis um das nächstgelegene Heizelement 5 erstrecken. Die freigeschnittenen Federzungen 36 haben jeweils scharfkantige Schneiden und sind mit Widerhaken versehen. Die freien Enden der Federzungen 36 sind in etwa der Außenkontur des Haltestifts 14 angepasst und konkav. Die zur Aufnahme des Haltestifts 14 bestimmte, mittige Öffnung des Durchbruchs 33 ist so bemessen, dass sich die gegenüberliegenden Federzungen 36 beim Aufstecken entgegen der Aufsteckrichtung A verbiegen. Die zweite Kontaktplatte 4 erstreckt sich, ebenso wie die erste Kontaktplatte 3, im Wesentlichen in einer Ebene. Die kreisförmigen Anlageflächen 39, die aus der Ebene der zweiten Kontaktplatte 4 in Richtung der Heizelemente 5 vorstehen, sind in Form und Größe genau den Kontaktflächen der Heizelemente 5 angepasst. Die Haltestifte 14 sind in etwa gleichmäßig um den Umfang dieser Anlageflächen 39 verteilt.

Die Wirkungsweise der erfindungsgemäßen Heizeinrichtung wird anhand des Ausführungsbeispiels näher erläutert.

Zunächst wird die erste Kontaktplatte 3 auf die Haltestifte 14 aufgesteckt bis sie auf einer Anschlagsfläche nahe des Gehäusebodens 9 zum Liegen kommt. Der Führungsabschnitt 37 ist dabei mit einer entsprechenden, an der Innenseite 13 des Außenzylinders 8 vorgesehenen Führungsschiene 38 im Eingriff. Beim Aufstecken durchdringen die Haltestifte 14 die pfeilförmigen Öffnungen 25. Die Größe der Halteöffnungen 25 ist so bestimmt, dass die Haltestifte 14 beim Aufstecken geringfügig in einer Richtung entgegen der jeweiligen Pfeilrichtung verbogen werden.

Auf die erste Kontaktplatte 3 werden die Heizelemente 5 auf den dafür vorgesehenen Stellen positioniert. Im gezeigten Ausführungsbeispiel sind vier Haltestifte 14 pro Heizelement 5 vorgesehen und im Wesentlichen auf einen Kreis um das jeweils nächstgelegene Heizelement 5 angeordnet.

Nach dem Einbau der ersten Kontaktplatte 3 und der drei Heizelemente 5 wird der Thermostat 6 und das Kontaktblech 30 in den dafür vorgesehenen Abschnitt 15 platziert und zunächst mit einer Schraube 32 an einer Seite mit dem dafür vorgesehenen Schraubbock 17 verschraubt. Die Kontaktanschlüsse 23 und 30a liegen somit unmittelbar nebeneinander und können die Kontaktstifte 12 aufnehmen. Im montierten Zustand wird dadurch ein leitender Kontakt für Wärme und Strom zwischen der zweiten Kontaktplatte 4 und dem Thermostat 6 bzw. dem Kontaktstift 12 an einem Halteabschnitt 27 des Thermostaten 6 hergestellt.

Danach wird die zweite Kontaktplatte 4 in Aufsteckrichtung A auf die Haltestifte 14 aufgesteckt. Die Haltestifte 14 sind an Ihrem freien Ende kegelstumpfartig zugespitzt. Die Spitze der Haltestifte 14 passt in unverformtem Zustand der Federabschnitte 26 genau zwischen die beiden Federzungen 26. Beim Aufschieben der zweiten Kontaktplatte 4 verbiegen sich die Federzungen 26 entgegen der Aufsteckrichtung A. Die zweite Kontaktplatte 4 wird unter Krafteinwirkung auf die Haltestifte 14 aufgesteckt und in Anlage an alle Heizelemente 5 gebracht.
Dabei werden die Haltestifte 14 wieder in ihre ursprüngliche, gerade Form gebogen und in den Pfeilöffnungen 25 der ersten Kontaktplatte 4 gegen die Flanken der Pfeilspitzen gedrückt. So wird die erste Kontaktplatte 3 gegenüber den Haltestiften 14 verklemmt und gegen Wackeln gesichert.
Durch Ihre Rückstellkraft klemmen die Federzungen 26 der zweiten Kontaktplatte 4 die jeweiligen Haltestifte 14 ein. Da die Haltestifte 14 aus weicherem Material als die Federzungen 26 hergestellt sind und endseitig scharfkantige Schneiden aufweisen, verkeilen sich die Federzungen 26 und verhindern so eine Bewegung der zweiten Kontaktplatte 4 entgegen der Aufsteckrichtung A.

Nach dem Aufstecken wird die zweite Kontaktplatte 4 mit dem Gehäuse 2 verschraubt. Die Schraube 31 wird dazu in ein entsprechendes Bohrloch 35 eingeführt, das genau über einem Bohrloch 28 in einem Halteabschnitt 26 des Thermostaten 6 liegt und mit dem Schraubbock 16 seitlich am Abschnitt 15 verschraubt. So werden auch die zweite Kontaktplatte 4 und der Thermostat 6 fest mit dem Gehäuse 2 verbunden.

Die Heizeinrichtung 1 kann danach über die Kontaktstifte 12 an einen Stromkreis angeschlossen werden. Eingebaut in z.B. den Kraftstofffilter eines Dieselmotors fließt im Betrieb Dieselkraftstoff über die Kontaktplatten 3,4. Stellt der Thermostat 6 eine Kraftstofftemperatur von kleiner oder gleich -2°C fest, so schließt ein Bimetallschalter den Stromkreis und Strom fließt durch die Anordnung. Die Funktionsweise eines solchen Thermostaten 6 wird als bekannt vorausgesetzt und an dieser Stelle nicht näher erläutert. Die Heizelemente 30 sind sogenannte PTC (Positive-Temperature-Coefficient) Elemente, die als Widerstände wirken und elektrische Leistung in Wärme umwandeln. Auch die Funktionsweise derartiger Heizelemente 5 wird als bekannt vorausgesetzt und hier nicht näher beschrieben. Über die Kontaktplatten 3,4 wird die Wärme an den Dieselkraftstoff übertragen. Dazu ist der Kontaktdruck zwischen den Heizelementen 5 und den Kontaktplatten 3,4 erforderlich. Der Bimetallschalter öffnet den Stromkreis sobald der Dieselkraftstoff eine Temperatur von +5°C oder höher erreicht hat. Somit fließt kein Strom mehr durch die Anordnung und der Kraftstoff wird nicht weiter beheizt.

## Patentansprüche

1. Heizeinrichtung (1) für ein gasförmiges oder flüssiges zu beheizendes Medium mit zwei in einem Gehäuse (2) angeordneten, der Wärmeübertragung dienenden Kontaktplatten (3,4), die im Wesentlichen parallel zueinander angeordnet sind und sich im Wesentlichen jeweils in einer Ebene erstrecken und zwischen denen zumindest ein scheibenförmiges Heizelement (5) angeordnet und in Anlage an beide Kontaktplatten (3,4) gehalten ist, und einem innerhalb des Gehäuses angeordneten Thermostaten (6), der einen Stromzufluss zum Heizelement (5) bei Erreichen einer bestimmten Betriebstemperatur unterbricht, wobei das Thermostatgehäuse eine zylindrische Form aufweist und so angeordnet ist, dass sich die Zylinderachse des Thermostatgehäuses (6) im Wesentlichen senkrecht zur Ebene der Kontaktplatten (3,4) erstreckt, **gekennzeichnet dadurch, dass** der Thermostat (6) im Gehäuse so angeordnet ist, dass das Thermostatgehäuse die Ebenen beider Kontaktplatten (3,4) schneidet dass die Kontaktplatten (3,4) im Wesentlichen ringförmig sind und jeweils eine Unterbrechung (22,40) der Ringform aufweisen, wobei der Thermostat (6) zumindest abschnittsweise innerhalb dieser Unterbrechungen (22,40) angeordnet ist,
und dass die Differenz des Aussen- und des Innenradius der ringförmigen Kontaktplatten (3,4) im Wesentlichen dem Durchmesser des Thermostatgehäuses (6) entspricht.

2. Heizeinrichtung (1) nach Anspruch 1, **dadurch gekennzeichnet, dass** der Thermostat (6) mit zumindest einer der Kontaktplatten (4) fest verbunden ist und einen Kontaktanschluss (7) für einen elektrischen Stromkreis aufweist, und die andere, nicht mit dem Thermostaten (6) verbundene Kontaktplatte (3), einen weiteren Kontaktanschluss (8) aufweist.

3. Heizeinrichtung (1) nach zumindest einem der voranstehenden Ansprüche, **dadurch gekennzeichnet, dass** der Thermostat (6) einen Zweipunktschalter, vorzugsweise einen Bimetallschalter aufweist, der die Heizeinrichtung (1) bei einer bestimmten gemessenen Minimaltemperatur, vorzugsweise -2 °C, automatisch einschaltet und bei einer bestimmten gemessenen Maximaltemperatur, vorzugsweise +2 °C, automatisch ausschaltet.

4. Heizeinrichtung (1) nach zumindest einem der voranstehenden Ansprüche, **dadurch gekennzeichnet, dass** die erste und die zweite Kontaktplatte (3,4) mit jeweils zumindest einem Durchbruch (25,33) versehen ist, und das Gehäuse (2) zumindest einen Haltestift (14) aufweist, der die Durchbrüche (25,33) der ersten und der zweiten Kontaktplatte (3,4) durchdringt.

5. Heizeiririchtung (1) nach zumindest einem der voranstehenden Ansprüche, **dadurch gekennzeichnet, dass** jedem Heizelement (5) vier Haltestifte (14) zugeordnet sind.

6. Heizeinrichtung (1) nach zumindest einem der voranstehenden Ansprüche, **dadurch gekennzeichnet, dass** das Gehäuse (2) aus Kunststoff hergestellt ist.

## Claims

1. A heating device (1) for a gaseous or liquid medium to be heated having two contact plates (3, 4) for heat transfer which are disposed in a housing (2) substantially parallel to one another and extend substantially in one respective plane, and between which at least one disc-like heating element (5) is disposed and is held in contact with both contact plates (3, 4), and having a thermostat (6) which is disposed inside the housing and which interrupts a current supply to the heating element (5) when a specified operating temperature is reached, the thermostat housing being cylindrical in form and being positioned such that the cylinder axis of the thermostat housing (6) extends substantially perpendicular to the plane of the contact plates (3, 4) **characterised in that** the thermostat (6) is disposed in the housing such that the thermostat housing intersects the planes of the two contact plates (3, 4), that the contact plates (3, 4) are substantially annular and respectively have a break (22, 40) in the annular shape, the thermostat (6) being disposed at least partially within these breaks (22, 40), and that the differential between the outer and the inner radius of the annular contact plates (3, 4) substantially corresponds to the diameter of the thermostat housing (6).

2. The heating device (1) according to Claim 1, **characterised in that** the thermostat (6) is rigidly connected to at least one of the contact plates (4) and has a contact terminal (7) for an electrical circuit, and the other contact plate (3) not connected to the thermostat (6) has a further contact terminal (8).

3. The heating device (1) according to at least one of the preceding claims, **characterised in that** the thermostat (6) has a two-point switch, preferably a bimetal switch, which automatically switches the heating device (1) on at a specified measured minimum temperature, preferably -2°C, and automatically switches the same off at a specified measured maximum temperature, preferably +2°C.

4. The heating device (1) according to at least one of the preceding claims, **characterised in that** the first and the second contact plate (3, 4) are each provided with at least one perforation (25, 33), and the housing (2) has at least one holding pin (14) which penetrates the perforations (25, 33) of the first and second contact plates (3, 4).

5. The heating device according to at least one of the preceding claims, **characterised in that** each heating element (5) is allocated four holding pins (14).

6. The heating device (1) according to at least one of the preceding claims, **characterised in that** the housing (2) is manufactured from plastic.

## Revendications

1. Dispositif de chauffage (1) pour un fluide gazeux ou liquide à chauffer, comportant deux plaques de contact (3, 4) agencées dans un boîtier (2) et destinées à transmettre la chaleur, lesquelles sont agencées sensiblement parallèlement l'une à l'autre et s'étendent sensiblement chacune dans un plan et entre lesquelles au moins un élément chauffant (5) en forme de disque est agencé et est maintenu en appui contre les deux plaques de contact (3, 4), et un thermostat (6) qui est agencé à l'intérieur du boîtier et interrompt l'admission du courant vers l'élément chauffant (5) lorsqu'une température de service déterminée est atteinte, le boîtier du thermostat présentant une forme cylindrique et étant disposé de telle sorte que l'axe du cylindre formé par le boîtier de thermostat (6) est sensiblement perpendiculaire au plan des plaques de contact (3, 4), **caractérisé en ce que** le thermostat (6) est agencé dans le boîtier de telle sorte que le boîtier du thermostat coupe les plans des deux plaques de contact (3, 4), **en ce que** les plaques de contact (3, 4) sont sensiblement annulaires et présentent chacune une interruption (22, 40) de la forme annulaire, le thermostat (6) étant agencé au moins en partie à l'intérieur de ces interruptions (22, 40), et **en ce que** la différence entre le rayon extérieur et le rayon intérieur des plaques de contact (3, 4) annulaires correspond sensiblement au diamètre du boîtier du thermostat (6).

2. Dispositif de chauffage (1) selon la revendication 1, **caractérisé en ce que** le thermostat (6) est relié de manière fixe à au moins une des plaques de contact (4) et comporte un raccord de contact (7) pour un circuit électrique, et l'autre plaque de contact (3), non reliée au thermostat (6), comporte un autre raccord de contact (8).

3. Dispositif de chauffage (1) selon au moins l'une des revendications précédentes, **caractérisé en ce que** le thermostat (6) comporte un commutateur à deux points, de préférence un commutateur bimétallique, qui connecte automatiquement le dispositif de chauffage (1) en présence d'une température minimale déterminée mesurée, de préférence -2 °C, et le déconnecte automatiquement en présence d'une température maximale déterminée mesurée, de préférence +2 °C.

4. Dispositif de chauffage (1) selon au moins l'une des revendications précédentes, **caractérisé en ce que** la première et la deuxième plaque de contact (3, 4) comportant chacune au moins un trou débouchant (25, 33), et le boîtier (2) comporte au moins un ergot de fixation (14), qui passe à travers les trous débouchants (25, 33) de la première et de la deuxième plaque de contact (3, 4).

5. Dispositif de chauffage (1) selon au moins l'une des revendications précédentes, **caractérisé en ce que** quatre ergots de fixation (14) sont associés à chaque élément chauffant (5).

6. Dispositif de chauffage (1) selon au moins l'une des revendications précédentes, **caractérisé en ce que** le boîtier (2) est réalisé en matière plastique.
